(19) Europäisches Patentamt
European Patent Office
Office européen des brevets

(11) **EP 1 309 185 A1**

(12) **EUROPEAN PATENT APPLICATION**

(43) Date of publication:
**07.05.2003 Bulletin 2003/19**

(51) Int Cl.7: **H04N 5/21**

(21) Application number: **01126029.6**

(22) Date of filing: **31.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Sony International (Europe) GmbH 10785 Berlin (DE)**

(72) Inventors:
• **Unruh, Christian, Advanced Technology Center Heinrich-Hertz-Str. 1, 70327 Stuttgart (DE)**

• **Dilly, Altfried, Advanced Technology Center Heinrich-Hertz-Str. 1, 70327 Stuttgart (DE)**
• **Wagner, Peter, Advanced Technology Center Heinrich-Hertz-Str. 1, 70327 Stuttgart (DE)**

(74) Representative: **Müller - Hoffmann & Partner Patentanwälte, Innere Wiener Strasse 17 81667 München (DE)**

(54) **Image noise detection**

(57) A method of detecting noise contained in an image (2) comprises the steps of defining an image region (4) within the image (2) by selecting the size and/or shape and/or position of said image region (4), detecting the noise contained in said defined image region (4) by performing a corresponding noise detection algorithm which comprises the steps of collecting noise data (9) of the image region (4) and weighting at least parts of said collected noise data on the basis of human visual perception data, estimating the noise of the image (2) on the basis of the weighted noise data of the image region (4), wherein, in said defining step, said size and/ or shape and/or position of said image region (4) are dynamically chosen in dependency of changing computational demands.

Fig. 2

**Description**

The invention relates to a method of detecting noise contained in an image.

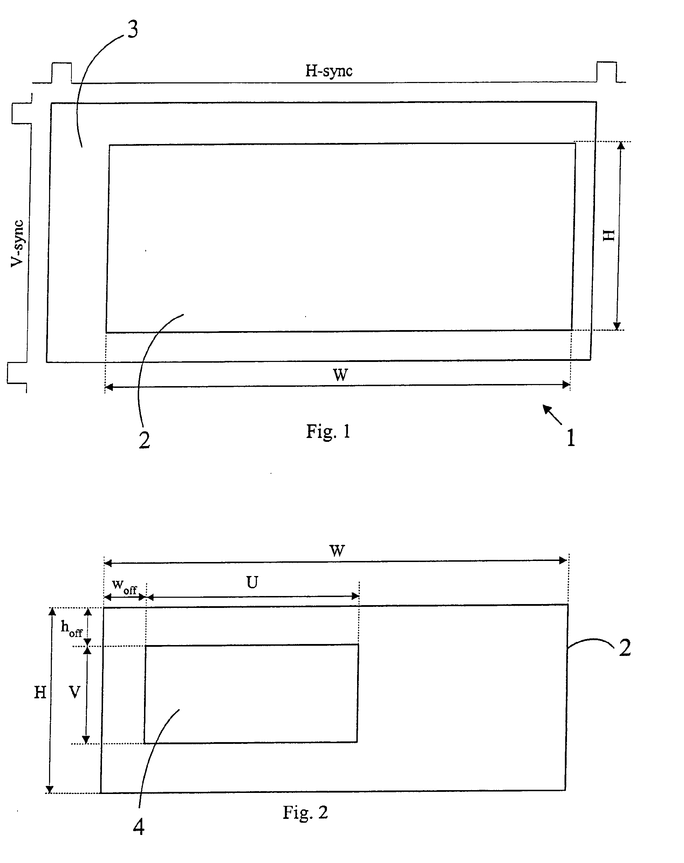

Many different techniques are known to measure the level of noise/distortion being present in a given image/ video signal. Basically, this techniques can be classified into two different kinds of techniques, which will be described in the following while making reference to Fig. 1.

Fig. 1 shows that video/image signal data 1 (in the following only referred to as image signal data) generally comprises "real" video/image data 2, also referred to as active video/image data (in the following only referred to as image data), and video/image controlling data 3 (in the following only referred to as image controlling data), which comprises additional data being correlated to said image data 2, for example blanking interval information (horizontal blanking gap).

The first kind of techniques to measure noise uses a priori knowledge of certain parts of the image signal data 1. That is, noise being contained within the image controlling data 3 is detected. This technique bases on the assumption that the noise being present in the image controlling data 3 is directly correlated to the noise in the image data 2.

The second kind of techniques to measure noise directly measures the noise contained within the image data 2. Typically, homogenous areas are searched within the image data 2. In those areas the high frequency components represent noise. To estimate the level of noise within the homogenous areas, variance calculations are performed.

A disadvantage of the first technique is the assumption that the noise detected within the image controlling data 3 is directly correlated to the noise contained within the image data 2. That means that problems arise if for example blanking intervals have been regenerated by any device during the video/image signal transmission, since in such a case the correlation between the noise contained within the image controlling data 3 and the noise contained within the image data 2 gets lost. A disadvantage of the second technique is that a lot of hardware (field-/frame memories, motion estimator, etc.) and calculation power (required by the motion estimator, pre-filtering of the video signal, etc.) is required.

Besides the disadvantages described above, both techniques are not suitable for being employed within a DSP (Digital Signal Processor), since they cannot be adjusted/scaled to changing available computational resources (CPU-load, free memory, etc.) on the DSP.

In the following description, the term "image" is to be understood as a part of said image signal data 1 which only comprises "real" image data (i. e. no image controlling data) and which can be represented in a two dimensional manner. In terms of Fig. 1, said term "image" would be equal to the area (HxW) covered by the image data 2.

It is an object of the present invention to provide a method of detecting noise contained in image signal data which avoids the problems described above.

To solve this object, the present invention provides a method of detecting noise according to claim 1. Preferred embodiments of the inventive method are described in claims 2 to 11. Further, a system for detecting noise according to claim 12 is provided. A computer program product according to the present invention is defined in claim 13.

According to the present invention, the method of detecting noise contained in an image comprises the steps of:

- defining an image region within the image by selecting the size and/or shape and/or position of said image region,
- detecting the noise contained in said defined image region by performing a corresponding noise detection algorithm, which comprises the steps of collecting noise data of the image region and weighting at least parts of said collected noise data on the basis of human visual perception data,
- estimating the noise of the image on the basis of the weighted noise data of the image region,
- wherein, in said defining step, said size and/or shape and/or position of said image region are dynamically chosen in dependency of changing computational demands.

In a preferred embodiment, the image region is divided into a plurality of blocks, wherein each block consists of a plurality of pixel values, respectively.

The noise detection algorithm is performed for each block to detect the noise within each block, respectively. The noise values respectively detected for the different blocks are used as basis for estimating the noise of the image region. Then, the noise of the image is estimated on the basis of the noise detected for the image region. In this embodiment, the size and/or amount of the blocks within the image region are chosen in dependency of changing computational demands.

The possibility of dynamically choosing the size and/or shape of the image region and the size and/or amount of the blocks within the image region makes it possible to dynamically adapt the noise detection process to changing computational resources. If, for example, the noise detecting procedure is performed within a DSP, which shows varying CPU-load, and varying memory capacity, it is possible to adapt the computational resources needed by the noise detecting procedure to the computational resources currently available on the DSP. For example, the size of the image region may be decreased/increased and/or the size of the blocks may be increased/decreased and/or amount of the blocks may be decreased/increased if the computational resources for performing the noise detection decrease/increase. Thus, a fully scalable noise detection is provided, which even yields reliable noise detection results when only little computational resources are available to perform the noise detection.

In a preferred embodiment, the size and/or shape and/or position of the image region are changed with respect to time in a way that after a certain period of time the complete image or at least large parts thereof have been temporarily covered by corresponding image regions. For example, if due to low computational resources noise detection can only be performed within a very small image region, the position of the image region may be changed over time such that the sum of all different image regions defined during said period of time cover a large part or even the whole image, thereby providing a better noise detection after a certain period of time.

The step of changing the size and/or shape and/or position of said image region may be based on a random process which randomly chooses the size and/or shape and/or position with respect to time. Alternatively, the size and/or shape and/or position may be changed according to a predetermined rule. The second alternative may be adopted to assure that after a predetermined time the whole image has been temporarily covered by corresponding image regions.

In a preferred embodiment, the noise detection algorithm comprises the following steps:

- calculating an average pixel value for each block, and calculating a pixel value variance for each block to obtain collected noise data, wherein the calculation of a pixel value variance of one specific block is based on an average pixel value corresponding to said specific block, respectively,
- calculating a mean value of calculated pixel value variances, said mean value being representative for the noise in said image.

The term "pixel value variance" means a pixel variance value derived from pixel values of pixels within a single block. Accordingly, the term "average pixel value" means an average pixel value derived from pixel values of pixels within a single block. In other words, each block "has its own" pixel variance value and its own average pixel value.

An advantage of this algorithm is that no image preprocessing is necessary since the noise detection is performed on the current active image. That is, noise detection is performed image by image, no information of previous/succeeding images of one specific image are needed to perform noise detection of said specific image. Thus, since only one field memory for storing the current active image is needed (no differences between two images are used), only a minimum of hardware is required. Another advantage is that the noise detection algorithm shows only low complexity. Thus, this noise detection algorithm is very suitable to be employed within a DSP.

As already indicated, an important aspect of the present invention is that noise data which has been collected for the image region is weighted on the basis of human visual perception data. In particular, the calculated pixel value variances are subjected to said weighting process. However, any other kind of data representive for noise may be used. The weighting process enables to save computational power: noise within an image is judged by the weighting process which assigns a low "effective noise level" to detected noise if the detected noise is not "visible" for the human visual system. Noise having a low effective noise level is not corrected in image postprocessing, thus computational power is saved.

To perform the weighting process, preferably each calculated pixel value variance is weighted in dependence of its corresponding average pixel value from which the pixel value variance was derived by using a weighting function being dependent on the average pixel value. The weighting process is performed before calculating said mean value on the basis of the weighted pixel value variances. The weighting function is based on the human visual perception data.

Preferably, the noise detection algorithm comprises a noise data processing step, wherein it is estimated whether the collected and weighted noise data is reliable noise data or not. To do this, the weighted noise data may be compared with functions containing empirical/calculated noise knowledge.

The invention further provides a system for detecting noise contained in an image which is capable of performing and/or realizing the method of detecting noise according to the present invention.

Further features and advantages of the present invention will be described in the following detailed description in conjunction with the accompanying drawings wherein:

**Fig. 1**  shows an image/video signal comprising image data and image controlling data;

**Fig. 2**  shows the relationship between the image and the image region according to the present invention;

**Fig. 3**  shows a preferred embodiment of a weighting function being based on human visual perception data according to the present invention;

**Fig. 4**          shows a schematic drawing illustrating the inventive noise detection in a larger scope taking into account image post-processing;

**Fig. 5**          shows a schematic drawing illustrating a preferred embodiment of the noise detection algorithm according to the present invention;

**Fig. 6a - 6e**     shows relations being used to decide whether collected noise data is reliable noise data or not according to the present invention;

**Fig. 7**          shows a diagram illustrating the influence of the block size and the image region on the number of operations required for performing the noise detection;

**Fig. 8a and 8b**   show two examples of how to change the position of the image region within the image with respect to time according to the present invention.

In the following description, making reference to Figs. 2 to 6, a preferred embodiment of the inventive noise detection will be described.

First, an image region 4 is defined within the image 2 (which is constituted by image data). Then, the image region 4 (containing UxV pixel) is divided into a plurality of blocks of NxM pixel, respectively. Here, the horizontal block index is i, and its maximum value is (U/N), wherein the vertical block index is j, the maximum value thereof being (V/M). Then, for each block b(i,j), an average pixel value Ab(i,j) is calculated according to equation:

$$A_{b(i,j)} = \frac{1}{N \times M} \sum_{k=0}^{N-1} \sum_{\ell=0}^{M-1} P_{(i*N)+k,(j*M)+\ell} \qquad P_{g,h} \equiv \text{pixel value (column g, row h)}$$

Then, the pixel value variance within each block $V_{b(i,j)}$ is calculated according to the following equation:

$$V_{b(i,j)} = \frac{1}{(N \times M - 1)} \sum_{k=0}^{N-1} \sum_{\ell=0}^{M-1} \left( P_{(i*N)+k,(j*M)+\ell} - A_{b(i,j)} \right)^2$$

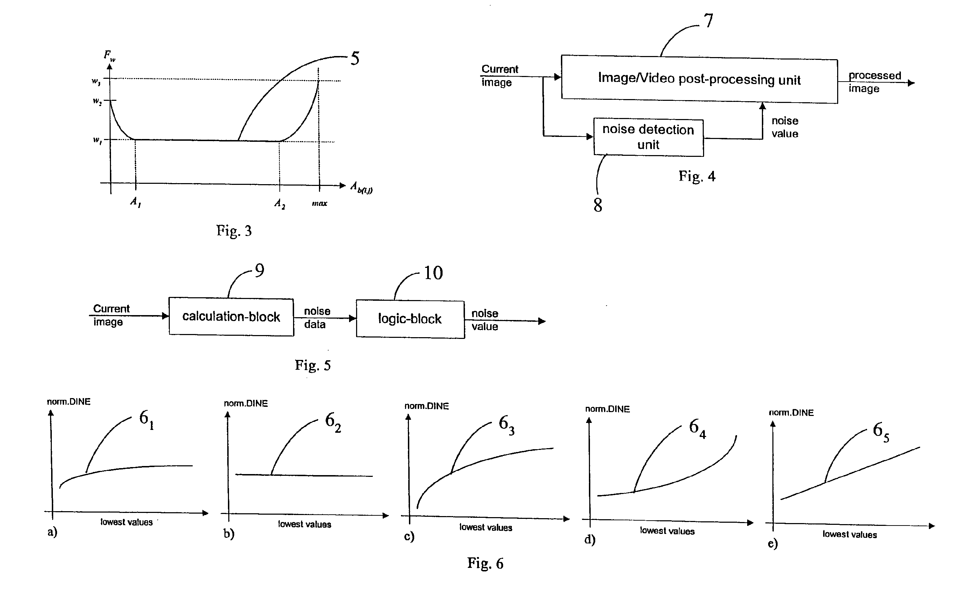

Next, all individual calculated pixel value variances are weighted according to a weighting function $F_w$, a preferred embodiment thereof being shown in Fig. 3 (reference numeral 5), wherein the average pixel value is used to determine the actual weighting factor out of the weighting function $F_w$ according to the following equation:

$$V_{weigthed,\, b(i,j)} = F_w \left( A_{b(i,j)} \right) * V_{b(i,j)}$$

The shape of the function $F_w$ is adapted to visual perception of noise/distortion within the luminance channel for the HVS (Human Visual System), i. e. the shape of this function contains human visual perception data.

Then, a predefined number X of lowest weighted pixel value variances (the pixel value variances having the lowest values) are stored in an array Low[0,...,X-1]. The pixel value variances stored in said array represent noise data which may be compared with a first to fifth normalized distribution curves $6_1$ to $6_5$ as shown in Figs. 6a to 6e. This curves $6_1$ to $6_5$ are preferably based on knowledge obtained from simulations. The first curve $6_1$ is typical for the presence of noise within an image 2, whereas the second to fifth curves $6_2$ to $6_5$ are common for noise-free original images. If, for example, the pixel value variance values stored in the array form a curve being similar to the first curve $6_1$, it is decided that the noise data collected in the steps described above is reliable noise data. In the sense of this invention noise data refers to certain properties of the selected parts of the image. If this is the case, an average value of the X lowest weighted pixel value variances is calculated to obtain a noise value representative for the noise within the image region 4. This is done according to the following equation:

$$DINE_{value} = \frac{1}{X} \sum_{y=0}^{X-1} Low\left[y\right]$$

Fig. 4 shows the noise detection algorithm in a larger scope regarding general picture post-processing (as it could be implemented on a DSP). According to Fig. 4, an image 2 is supplied both to an image/video post-processing unit 7 and a noise detection unit 8. The noise detection unit 8 calulates the noise contained in the image 2 according to the method described above. A calculated noise value is then sent from the noise detection unit 8 to the image/video post-processing unit 7 which for example chooses noise ratio algorithms and/or adjusts thresholds for image enhancement processes according to said noise value.

As already mentioned above, the noise detection algorithm basically consists of two individual blocks, which is indicated in Fig. 5: A calculation block 9, which performs all required operations (e. g. calculation, sorting, etc.) to create the noise data, and a logic block 10 which decides, based on noise data calculated by the calculation block 9, if the calculation data is reliable or not. If the noise data is reliable, a corresponding noise value will be used in further image processing, if the noise data is not reliable, no noise value will be used for further image processing.

In the following description, the scalability feature of the inventive noise detection method will be explained.

Table 1 shows the operations and the number of their occurences within a single block containing NxM pixel. (The sum of operations that is done per block does not include any latency due to DSP characteristics).

Table 1

| Operation per block | #of occurence (not optimized) |
| --- | --- |
| + | (N*M)*2 |
| - | N*M |
| * | (N*M)*2 |
| / | 1 |
| Sum of operations (latency not included) | 5*(N*M)+1 |

The number of blocks (NoB) that are used for calculating the noise of the image 2 depends on both the size of the blocks (NxM) and the size of the image region 4 (UxV). Thus, the number of blocks (NoB) being used during the noise detection is:

$$NoB = \left\lfloor \frac{U}{N} \right\rfloor * \left\lfloor \frac{V}{M} \right\rfloor$$

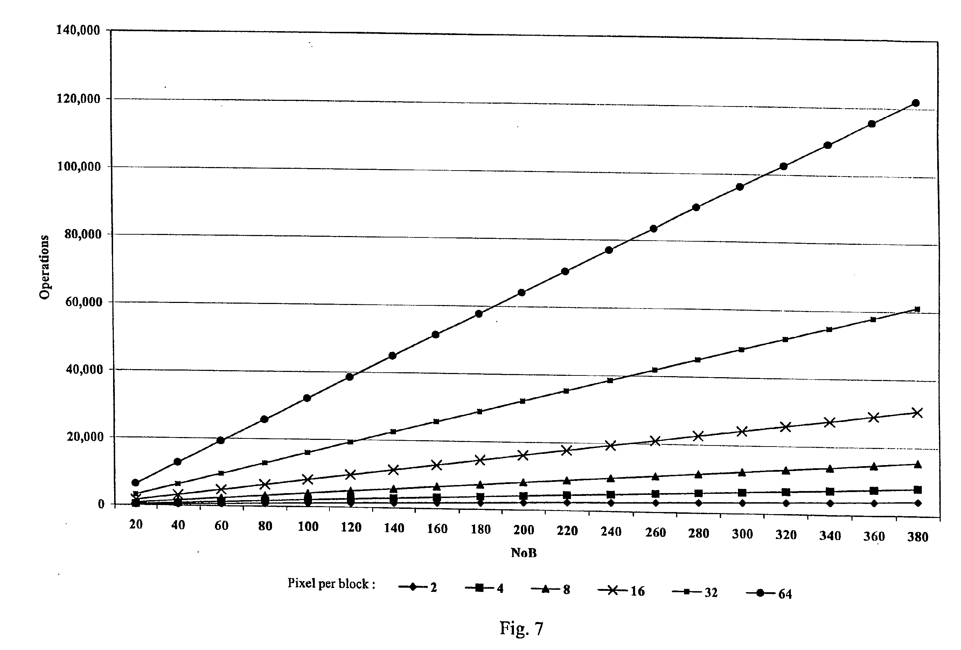

Fig. 7 depicts the influence of the block size and the image region 4 on the number of operations being required for detecting noise. A first to sixth operation curve $11_1$ $11_5$ show the relationship between the operations needed for detecting the noise and the number of blocks being used during said noise detection, wherein the first operation curve $11_1$ assumes 2 pixels per block, the second operation curve $11_2$ assumes 4 pixels per block, the third operation curve $11_3$ assumes 8 pixels per block, the fourth operation curve $11_4$ assumes 16 pixels per block, the fifth operation curve $11_5$ assumes 32 pixels per block, and the sixth operation curve $11_6$ assumes 64 pixels per block. It can be seen that the dynamical adaption (increase/decrease) of the size of the image region 4 enables a dynamical adaption to varying computational resources (increase/decrease of computational operations). The same applies for the size of the blocks. Thus, a fully scalable noise detection method is provided.

Once the image region 4 has been defined according to the available resources (e. g. available CPU-power or -time of a DSP per field), the positioning (defined by the parameters $h_{off}$ and $w_{off}$ of Fig. 2) of the image region 4 within the image 2 might disadvantegously effect the calculated level of noise, which will be discussed in the following.

For example, due to limited CPU-power or -time being available for noise detection the image region 4 has been properly adjusted to available resources and is very small compared to the size of the whole image 2 (UxV<<WxH, see Fig. 1,2). Furthermore, after positioning the image region 4 in an unsuitable area of the image 2 and keeping this position constant, the image area 4 may contain only high spatial activity (i. e. details, which lead to high pixel value variances, noise may be masked) and no homogenous areas (i. e. pixel value variances due to noise). This circumstances would lead to the assumption that the current video signal is very noisy, which however, is not true.

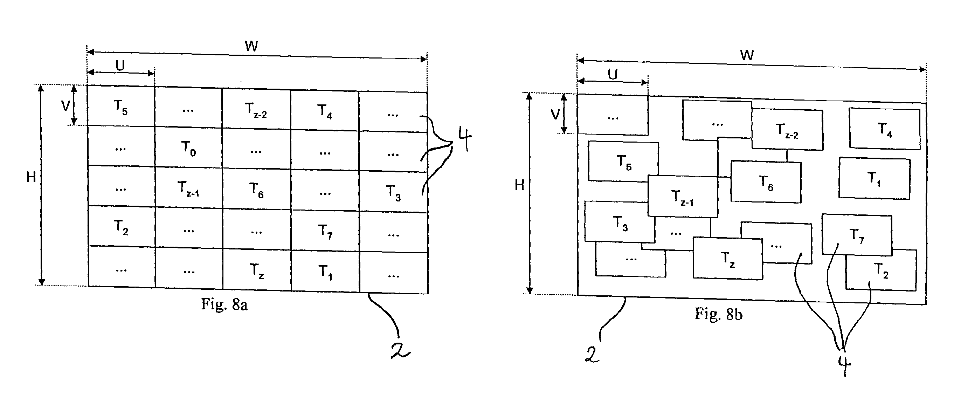

To prevent this miscalculation, the positioning of the image region 4 may be done according to the following rules as can be taken from Fig. 8a and 8b: As a first possibility, the image 2 (indicated by WxH, see Fig. 1) is divided into several blocks $T_0$ to $T_Z$, each block representing the image region 4 for a different time instance (The letters $T_0$ to $T_Z$ respectively indicate different time instances). For each new time instance the position of the image region 4 is changed according to the segmentation scheme shown in Fig. 8a. The result of this positioning strategy is that the complete area of the image 2 is covered after a predetermined number ($T_Z$) of time instances (fields).

The second possibility, as shown in Fig. 8b, is to use random positioning of the image area 4 within the image 2. In this embodiment, after $T_Z$ time instances the image 2 has usually not been completely covered.

Literature:

(1) "SDA 9402/SDA9402S-Preliminary Data Sheet 01.2001"; Infineon/Micronas; 2001
(2) "Video processing for multimedia systems" G. de Haan, University Press Eindhoven
(3) "Apparatus and method for signal dependent noise estimation and reduction in digital images"; US 5,923,775
(4) "Method for estimating the noise level in a video sequence"; EP 0 950 899 A1
(5) "Noise measurement in video images"; Christian Hentschel, Haiyan He; Conference report; ICCE 2000
(6) "Video-Signalverarbeitung (Video signal processing)"; Christian Hentschel, Reihe Informationstechnik, B. G. Teubner Verlag; Stuttgart 1998
(7) "Locally Adaptive Perceptual Image Coding"; Ingo Hontsch, IEEE Transactions on Image Processing, Vol. 9, No. 9, September 2000
(8) "A Generalized Block-Edge Impaiment Metric for Video Coding"; H. R. Wu, M. Yuen, IEEE Signal Processing Letters, Vol. 4, No. 11, November 1997

**Claims**

1. Method of detecting noise contained in an image (2), comprising the steps of:

   - defining an image region (4) within the image by selecting the size and/or shape and/or position of said image region (4),
   - detecting the noise contained in said defined image region (4) by performing a corresponding noise detection algorithm, which comprises the steps of collecting noise data (9) of the image region (4) and weighting at least parts of said collected noise data on the basis of human visual perception data,
   - estimating the noise of the image (2) on the basis of the weighted noise data of the image region (4),
   - wherein, in said defining step, said size and/or shape and/or position of said image region (4) are dynamically chosen in dependency of changing computational demands.

2. Method according to claim 1, **characterized by**

   - dividing said image region (4) into a plurality of blocks, each block consisting of a plurality of pixel values, respectively,
   - performing said noise detection algorithm for each block to detect the noise within each block, respectively, wherein said step of estimating the noise of the image (2) is performed on the basis of different noise values respectively detected for different blocks.

3. Method according to claim 2, **characterized by** dynamically choosing the size and/or amount of said blocks within said image region (4) in dependency of changing computational demands.

4. Method according to claim 2 or 3, **characterized in that** said noise detection algorithm comprises the following steps:

   - calculating an average pixel value for each block, and calculating a pixel value variance for each block to obtain said collected noise data, wherein the calculation of a pixel value variance of one specific block is based on an average pixel value corresponding to said specific block, respectively,

- calculating a mean value of calculated pixel value variances, said mean value being representative for the noise in said image.

5. Method according to claim 4, **characterized in that**, before calculating said mean value of calculated pixel value variances, each calculated pixel value variance is weighted in dependence of its corresponding average pixel value from which the pixel value variance was derived by using a weighting function (5) being dependent on the average pixel value, thereby obtaining said weighted noise data.

6. Method according to claim 5, **characterized in that** the weighting function (5) is based on said human visual perception data.

7. Method according to anyone of the preceding claims, **characterized in that** said noise detection algorithm comprises a noise data processing step (10) to estimate whether the weighted noise data is reliable noise data.

8. Method according to anyone of the preceding claims, **characterized in that** said size and/or shape and/or position of said image region (4) are changed with respect to time so that after a certain period of time the complete image (2) or at least large parts thereof have been temporarily covered by corresponding image regions (4).

9. Method according to claim 8, **characterized in that** said step of changing said size and/or shape and/or position of said image region (4) is based on a process randomly choosing said size and/or shape and/or position.

10. Method according to anyone of the preceding claims, **characterized in that** said image (2) only contains image data, i.e. no image controlling data.

11. Method according to anyone of the preceding claims, **characterized in that** said size of said image region (4) is decreased/increased and/or the size of said blocks are increased/decreased and/or amount of said blocks are decreased/increased if available computational resources for performing the noise detection decrease/increase.

12. System for detecting noise contained in an image (2) which is capable of performing and/or realizing the method for detecting noise according to anyone of the preceding claims 1 to 11 and/or the steps thereof.

13. Computer program product, comprising computer program means to perform the method steps as defined in anyone of the claims 1 to 11 when said computer program product is executed on a computer, digital signal processor, or the like.

Fig. 1

Fig. 2

$F_w$

$w_3$

$w_2$

$w_1$

$A_1$ $A_2$ max $A_{b(I,J)}$

5

Fig. 3

Current image → Image/Video post-processing unit 7 → processed image

noise detection unit 8 → noise value

Fig. 4

Current image → calculation-block 9 — noise data → logic-block 10 — noise value →

Fig. 5

norm.DINE $6_1$ lowest values a)

norm.DINE $6_2$ lowest values b)

norm.DINE $6_3$ lowest values c)

norm.DINE $6_4$ lowest values d)

norm.DINE $6_5$ lowest values e)

Fig. 6

EP 1 309 185 A1

Fig. 7

EP 1 309 185 A1

| | | | | |
|---|---|---|---|---|
| $T_5$ | ... | $T_{z-2}$ | $T_4$ | ... |
| ... | $T_0$ | ... | ... | ... |
| ... | $T_{z-1}$ | $T_6$ | ... | $T_3$ |
| $T_2$ | ... | ... | $T_7$ | ... |
| ... | ... | $T_z$ | $T_1$ | ... |

Fig. 8a

Fig. 8b

**European Patent Office**

**EUROPEAN SEARCH REPORT**

Application Number

EP 01 12 6029

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01 67391 A (KONINKLIJKE PHILIPS ELECTRONICS) 13 September 2001 (2001-09-13) * the whole document * --- | 1,2,7, 10,12,13 | H04N5/21 |
| A | US 3 995 105 A (KRIVOSHEEV ET AL) 30 November 1976 (1976-11-30) * abstract * * column 2, line 32 - line 53 * * column 6, line 9 - line 50 * * column 13, line 61 - column 14, line 25 * --- | 1,2,10, 12 | |
| A | US 5 453 799 A (YANG ET AL.) 26 September 1995 (1995-09-26) * column 3, line 8 - line 22 * --- | 1 | |
| A | EP 1 148 731 A (CANON) 24 October 2001 (2001-10-24) * page 9, line 46 - page 10, line 13 * ----- | 1 | |

| | | | TECHNICAL FIELDS SEARCHED (Int.Cl.7) |
|---|---|---|---|
| | | | H04N |

The present search report has been drawn up for all claims

| Place of search | Date of completion of the search | Examiner |
|---|---|---|
| THE HAGUE | 2 April 2002 | Berwitz, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 12 6029

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2002

| Patent document cited in search report | | Publication date | Patent family member(s) | | Publication date |
|---|---|---|---|---|---|
| WO 0167391 | A | 13-09-2001 | US | 6359658 B1 | 19-03-2002 |
| | | | WO | 0167391 A2 | 13-09-2001 |
| US 3995105 | A | 30-11-1976 | NONE | | |
| US 5453799 | A | 26-09-1995 | NONE | | |
| EP 1148731 | A | 24-10-2001 | JP | 2002010216 A | 11-01-2002 |
| | | | EP | 1148731 A1 | 24-10-2001 |
| | | | US | 2001033620 A1 | 25-10-2001 |

EPO FORM P0459

For more details about this annex : see Official Journal of the European Patent Office, No. 12/82